# EUROPÄISCHE PATENTSCHRIFT

(11) **EP 1 846 943 B1**
(45) Veröffentlichungstag und Bekanntmachung des Hinweises auf die Patenterteilung: **30.06.2010**
(21) Anmeldenummer: 06705888.3
(22) Anmeldetag: 02.02.2006
(51) Int. Cl.: H01K 1/32

(54) **NIR-GLÜHLAMPE**
NIR INCANDESCENT LAMP
LAMPE A INCANDESCENCE DANS L'INFRA-ROUGE PROCHE

(30) Priorität: 07.02.2005 DE 102005005754
(43) Veröffentlichungstag der Anmeldung: 24.10.2007
(73) Patentinhaber: Osram Gesellschaft mit beschränkter Haftung, 81543 München (DE)
(72) Erfinder: SCHÄFER, Reinhard, 89522 Heidenheim (DE)
(86) Internationale Anmeldenummer: PCT/DE2006/000159
(87) Internationale Veröffentlichungsnummer: WO 2006/081802

(56) Entgegenhaltungen:
- EP-A- 0 522 850
- EP-A- 0 725 286
- EP-A- 1 156 514
- EP-A- 1 482 533
- DE-U1- 8 120 029
- JP-A- 2003 059 461

## Beschreibung

### Technisches Gebiet

Die Erfindung betrifft eine Glühlampe gemäß dem Oberbegriff des Patentanspruchs 1.

### Stand der Technik

Derartige Glühlampen finden beispielsweise im Bereich der Fahrzeugtechnik als NIR (nahinfrarot)-Lichtquelle von aktiven Nachtsichtgeräten Verwendung.

Bei derartigen, beispielsweise an Fahrzeugen angeordneten Nachtsichtgeräten sendet ein an der Fahrzeugfront angebrachter NIR-Scheinwerfer nahinfrarote Strahlung aus, die von Gegenständen auf der Fahrbahn oder am Fahrbahnrand reflektiert und durch eine mit CCD- oder CMOS-Sensoren bestückte digitale Kamera erfasst wird. Das von der Kamera empfangene Bild wird auf einem Flachbildschirm im Fahrzeuginneren dargestellt oder mittels eines Head-up Displays im Sichtfeld des Fahrers gegen die Windschutzscheibe projiziert. Durch den Einsatz von aktiven Nachtsichtgeräten werden für den Fahrzeuglenker Objekte sichtbar, bevor sie mit herkömmlichen Autoscheinwerfern erkennbar sind. Damit der NIR-Scheinwerfer vom Gegenverkehr nicht mit Heck- oder Bremsleuchten verwechselt wird, ist es erforderlich, alles Licht im sichtbaren Wellenlängenbereich durch ein optisches Filtersystem komplett zu unterdrücken. Der Übergangsbereich vom unterdrückten sichtbaren Wellenlängenbereich (VIS-Bereich) zum bildwirksamen NIR-Wellenlängenbereich muss dabei durch eine steile Filterkante sehr schmal sein. Aufgrund der steilen Filterkante wird einerseits verhindert, dass der Übergangsbereich im VIS-Wellenlängenbereich liegt und ungewünschtes rotes Restlicht abgestrahlt wird und andererseits verhindert, dass der Übergangsbereich zu weit in den NIR-Bereich verläuft und die Strahlungsintensität in diesem Bereich abnimmt.

Aus der deutschen Offenlegungsschrift DE 100 23 936 A1 ist eine Glühlampe zur Erzeugung von Licht im sichtbaren roten Farbspektrum bekannt, deren Lampengefäß eine hitzebeständige oxidische Interferenzfilterbeschichtung bestehend aus fünf Schichtstapeln aufweist. Der erste Schichtstapel des Interferenzfilters bildet eine Absorptionsschicht mit zwei integrierten dünnen Absorberschichten zur Absorption von ungewünschten blauen und violetten Lichtspektren aus. Die in den nachfolgenden vier Schichtstapeln aufgebrachte Interferenzbeschichtung besteht aus optisch niedrigbrechenden und optisch hochbrechenden Schichten und dient zur weiteren Unterdrückung von Licht aus dem violetten und blauen Spektralbereich und zur Einstellung der Filterkante des Interferenzfilters im sichtbaren roten Spektralbereich. Derartige Glühlampen erzeugen aufgrund ihrer steilen Filterkante bei einer Wellenlänge von ca. 590 nm sichtbares rotes Licht. Um die Filterkante in den NIR-Wellenlängenbereich zu verschieben, müssen für das Interferenzfilter dickere Schichten verwendet werden, die allerdings eine Durchlässigkeit im kurzwelligen VIS-Bereich bewirken und dadurch für NIR-Anwendungen ungewünschtes Restlicht abgestrahlt wird.

Die JP 2003-059461 offenbart eine mit einem Interferenzfilter versehene, Infrarotstrahlung emittierende Lampe für Nachtsichtanwendungen in einem Kraftfahrzeug.

Die EP 1 482 533 A2 offenbart eine mit einem Interferenzfilter ausgestattete Glühlampe zum Erzeugen von rotem Licht.

### Darstellung der Erfindung

Der Erfindung liegt die Aufgabe zugrunde, eine Glühlampe zu schaffen, die gegenüber herkömmlichen Lösungen eine verbesserte Unterdrückung von sichtbarem Licht bei gleichzeitig maximaler Durchlässigkeit im NIR-Wellenlängenbereich ermöglicht.

Diese Aufgabe wird erfindungsgemäß durch die Merkmale des Anspruchs 1 gelöst. Besonders vorteilhafte Ausführungen der Erfindung sind in den abhängigen Ansprüchen beschrieben.

Die erfindungsgemäße Glühlampe zur Erzeugung von elektromagnetischer Strahlung in einem nahinfraroten Wellenlängenbereich (NIR-Wellenlängenbereich) hat ein lichtdurchlässiges Lampengefäß, das ein Leuchtmittel umgibt und ein auf dem Lampengefäß angeordnetes Interferenzfilter, das mindestens drei Schichtstapel mit einer Vielzahl optisch niedrigbrechender und optisch hochbrechender Schichten aufweist. Ein erster Schichtstapel des Interferenzfilters ist als Absorptionsfilter zur Absorption von ungewünschten Lichtspektren mit zumindest zwei Absorptionsschichten und einer, zwischen den Absorptionsschichten angeordneten, optisch niedrigbrechenden Zwischenschicht ausgebildet. Erfindungsgemäß hat das Absorptionsfilter eine geringe Transmission für Licht in einem im Wesentlichen roten Spektralbereich, wobei das Interferenzfilter aufgrund der weiteren Schichtstapel eine Filterkante im NIR-Wellenlängenbereich besitzt. Aufgrund der geringen Transmission des Absorptionsfilters im roten Spektralbereich werden gegenüber dem Stand der Technik weniger Schichtstapel benötigt, da die Schichtdicken der folgenden Schichtstapel auf eine steile Filterkante und eine hohe Transmission für Licht aus dem NIR-Spektralbereich optimiert werden können. Dadurch wird elektromagnetische Strahlung im gewünschten NIR-Bereich abgestrahlt und die Abstrahlung von ungewünschtem roten Restlicht weitgehend verhindert.

In der erfindungsgemäßen Glühlampe weist die Schichtdicke einer ersten, unmittelbar auf dem Lampengefäß angeordneten Absorptionsschicht, mit der Schichtdicke einer zweiten, auf die optisch niedrigbrechende Zwischenschicht fol- gende Absorptionsschicht ein Schichtdickenverhältnis im Bereich von etwa 1:3 bis 1:9 auf.

Die erste Absorptionsschicht weist dabei eine Schichtdicke im Bereich von etwa 20 nm bis 40 nm und/oder die zweite Absorptionsschicht eine Schichtdicke im Bereich von etwa 180 nm bis 210 nm auf.

Vorzugsweise sind die Schichtdicken der Absorptionsschichten und der optisch niedrigbrechenden Zwischenschicht derart ausgebildet, dass diese eine geringe Transmission für Licht aus dem roten Spektralbereich und eine hohe Transmission für elektromagnetische Strahlung aus dem NIR-Wellenlängenbereich aufweisen. Insbesondere weist das Absorptionsfilter in dem Wellenlängenbereich von 590 nm bis 700 nm eine Transmission von kleiner oder gleich 50% auf. Die Filterkante des erfindungsgemäßen Interferenzfilters ist aufgrund der obigen Erläuterungen vorzugsweise derart steil ausgebildet, dass der Übergang der Transmission von 10% auf 80% in einem Wellenlängenbereich von kleiner oder gleich 50 nm erfolgt.

Gemäß einem bevorzugten Ausführungsbeispiel bestehen die beiden Absorptionsschichten aus Eisenoxid Fe₂O₃. Die Fe₂O₃-Schichten besitzen bei ausreichend dicker Schichtstärke im violetten bis roten Spektralbereich metallische und im NIR-Wellenlängenbereich dielektrische Eigenschaften. Durch Anpassung und Optimierung der Schichtdicken der Fe₂O₃-Schichten wird in Kombination mit der optisch niedrigbrechenden Zwischenschicht eine hohe Transmission im NIR-Wellenlängenbereich und eine hohe Absorption für Licht im sichtbaren violetten bis roten Spektralbereich erreicht.

Das Interferenzfilter ist vorzugsweise derart optimiert, dass die Filterkante im NIR-Wellenlängenbereich, insbesondere in einem Wellenlängenbereich von etwa 760 nm bis 1000 nm, vorzugsweise im Bereich von 780 nm bis 790 nm liegt. Dadurch wird gewährleistet, dass die erfindungsgemäße Glühlampe ein Lichtspektrum im NIR-Wellenlängenbereich emittiert und die Abstrahlung von ungewünschtem roten Restlicht verhindert wird.

Bei einer bevorzugten Ausführungsform der Erfindung sind die optisch niedrigbrechenden Schichten SiO₂-Schichten und die optisch hochbrechenden Schichten Nb₂O₅-Schichten. Es können aber auch andere, in der Dünnschichttechnik üblichen Materialien verwendet werden, wie z.B. TiO₂, Ta₂O₅, ZrO₂, HfO₂, oder Metallnitride. Die Interferenzfilterbeschichtung kann mittels aus dem allgemeinen Stand der Technik bekannten Beschichtungsverfahren, beispielsweise durch einen Sputter- oder CVD-Prozess erfolgen

Die optisch niedrigbrechenden Schichten weisen im Wesentlichen eine Schichtdicke im Bereich von etwa 100 nm bis 130 nm und die optisch hochbrechenden Schichten im Wesentlichen eine Schichtdicke im Bereich von etwa 30 nm bis 80 nm auf und sind alternierend auf dem Lampengefäß angeordnet.

Als besonders vorteilhaft hat es sich erwiesen, das Interferenzfilter aus zumindest 36 Schichten auszubilden.

Der zweite Schichtstapel des Interferenzfilters wird vorzugsweise von einer optisch hochbrechenden Schicht mit einer Schichtdicke von etwa 10 nm bis 20 nm begonnen und/oder der dritte Schichtstapel des Interferenzfilters von einer optisch hochbrechenden Schicht mit einer Schichtdicke von etwa 25 nm bis 45 nm abgeschlossen.

Die erfindungsgemäße Glühlampe kommt vorzugsweise als Infrarotstrahler bei Nachtsichtgeräten, insbesondere in einem NIR-Fahrzeugscheinwerfer zum Einsatz. Sie kann aber auch als Infrarotstrahler für Heizzwecke verwendet werden.

### Kurze Beschreibung der Zeichnungen

Nachstehend wird die Erfindung anhand eines bevorzugten Ausführungsbeispiels näher erläutert. Es zeigen:
Figur 1 eine Seitenansicht einer Glühlampe gemäß des bevorzugten Ausführungsbeispiels der Erfindung und
Figur 2 Transmissionskurven der drei Schichtstapel des Interferenzfilters.und des Interferenzfilters gemäß dem Stand der Technik
Figur 3 Transmissionskurve des erfindungsgemäßen Interferenzfilters

### Bevorzugte Ausführung der Erfindung

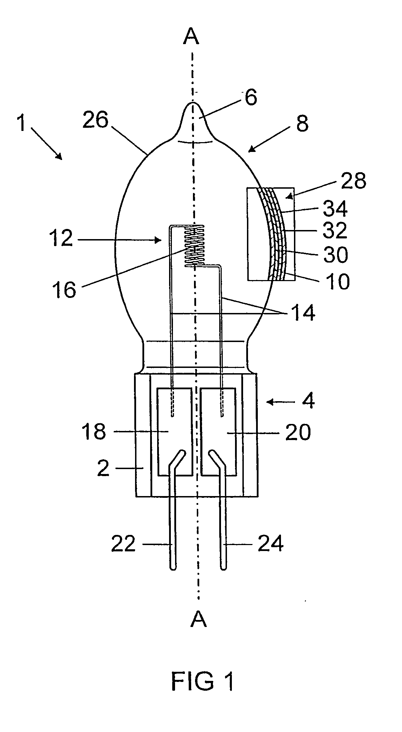

Figur 1 zeigt eine Glühlampe 1 zur Erzeugung von Licht in einem NIR-Wellenlängenbereich, die beispielsweise als Lichtquelle für ein aktives Nachtsichtgerät in einem NIR-Fahrzeugscheinwerfer verwendet wird. Diese Glühlampe 1 besitzt einen als Quetschdichtung 2 ausgebildeten Lampensockel 4 und ein um eine Lampenachse A-A rotationssymmetrisches über einen Pumpenstengel 6 abgedichtetes. Lampengefäß 8 aus Lampenglas 10, welches ein Leuchtmittel 12 umgibt. Bei dem Leuchtmittel 12 handelt es sich um eine axial in dem Lampengefäß 8 ausgerichtete Glühwendel 16, deren Wendelabgänge 14 jeweils mit einer in der Quetschdichtung 2 des Lampengefäßes 8 eingebetteten Molybdänfolie 18, 20 verschweißt sind. Die Molybdänfolien 18, 20 sind jeweils mit einem aus der Quetschdichtung 2 herausragenden Stromzuführungsdraht 22, 24 verbunden. Die im Wesentlichen gesamte äußere Oberfläche 26 des Lampengefäßes 8 ist mit einem Interferenzfilter 28 beschichtet, das erfindungsgemäß für elektromagnetische Strahlung im NIR-Wellenlängenbereich eine hohe Transmission besitzt und für elektromagnetische Strahlung anderer Spektralbereiche nahezu undurchlässig ist.

Das Interferenzfilter 28 besteht gemäß Tabelle 1 aus insgesamt 36 Interferenz- und Absorptionsschichten, die im Gegensatz zum Stand der Technik, nicht in fünf sondern in drei Schichtstapeln 30, 32, 34 beginnend mit Schicht Nr. 1 auf der äußeren Oberfläche 26 des Lampengefäßes 8 angeordnet sind.

Der Schichtaufbau des Interferenzfilters 28 besteht aus optisch niedrigbrechenden und optisch hochbrechenden Schichten, die in Sputtertechnik alternierend auf das Lampengefäß 8 aufgebracht werden.

Der erste Schichtstapel 30 des Interferenzfilters 28 ist als Absorptionsfilter ausgebildet und unmittelbar auf dem Lampengefäß 8 aufgebracht. Der Absorptionsfilter besteht aus einer ersten Absorptionsschicht aus Fe₂O₃ (Eisenoxid) mit einer physikalischen Schichtdicke von etwa 32 nm und einer zweiten Absorptionsschicht aus Fe₂O₃ mit einer wesentlich größeren physikalischen Schichtdicke von etwa 194 nm sowie einer zwischen den beiden Absorptionsschichten angeordneten, optisch niedrigbrechenden Zwischenschicht aus SiO₂ (Siliziumdioxid) mit einer physikalischen Schichtdicke von ungefähr 55 nm. Die Schichtdicke der ersten Absorptionsschicht bildet mit der Schichtdicke der zweiten Absorptionsschicht ein Schichtdickenverhältnis von etwa 1:6 aus, d.h. die zweite Absorptionsschicht ist wesentlich dicker ausgebildet als die erste Absorptionsschicht. Aufgrund ihrer Schichtdicke von 194 nm weist die zweite Fe₂O₃-Absorptionsschicht im violetten bis roten Spektralbereich metallische und im NIR-Wellenlängenbereich dielektrische Eigenschaften auf. In Kombination mit der optisch niedrigbrechenden SiO₂-Zwischenschicht wird dadurch eine hohe Transmission im NIR-Wellenlängenbereich und eine hohe Absorption für Licht im sichtbaren violetten bis roten Spektralbereich erreicht. Durch die erfindungsgemäß geringe Transmission des Absorptionsfilters im roten Spektralbereich, werden gegenüber dem Stand der Technik nur drei anstatt fünf Schichtstapel benötigt, da die Schichtdicken der auf den ersten Schichtstapel 30 folgenden Schichtstapel 32, 34 auf eine steile Filterkante und eine hohe Transmission für Licht aus dem NIR-Spektralbereich optimiert sind. Dadurch wird Licht im gewünschten NIR-Bereich abgestrahlt und die Abstrahlung von unerwünschtem roten Restlicht verhindert.

Der zweite Schichtstapel 32 wird von einer achtmal wiederholten Schichtenfolge gebildet, der aus optisch hochbrechenden Schichten aus Nb₂O₅ (Niobiumpentoxid) und optisch niedrigbrechenden Schichten aus SiO₂ besteht. Dieser zweite Schichtstapel 32 besitzt eine geringe Transmission für Licht aus dem violetten und blauen Spektralbereich und dient neben dem von dem ersten Schichtstapel 30 gebildeten Absorptionsfilter zur weiteren Unterdrückung von grünen und gelben Lichtspektren.

Der dritte Schichtstapel 34 wird ebenfalls von einer achtmal wiederholten Schichtenfolge gebildet, der aus optisch hochbrechenden Schichten aus Nb₂O₅ und optisch niedrigbrechenden Schichten aus SiO₂ esteht und dient neben der Unterdrückung von roten Lichtspektren zur Einstellung der Filterkante des Interferenzfilters 28 im NIR-Wellenlängenbereich bei ungefähr 790 nm. Die Schichtdicken der Nb₂O₅- und SiO₂-Schichten sind in diesem Stapel derart optimiert, dass das Interferenzfilter 28 bei einer Lichtwellenlänge von etwa 790 nm einen steilen Übergang von dem sichtbaren Spektralbereich geringer Transmission zu dem NIR-Bereich hoher Transmission aufweist.

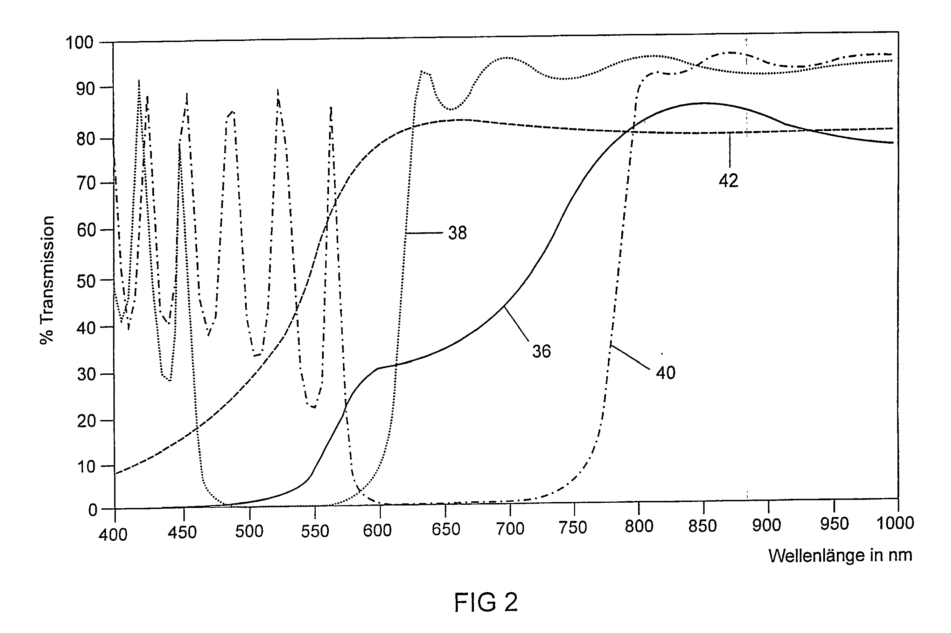

In Figur 2 ist das Transmissionsverhalten des ersten als Absorptionsfilter ausgebildeten Schichtstapels 30 durch eine Kurve 36, das Transmissionsverhalten des zweiten Schichtstapels 32 durch eine punktiert angedeutete Kurve 38 und das Transmissionsverhalten des dritten Schichtstapels 34 durch eine strichpunktiert angedeutete Kurve 40 dargestellt. Weiterhin ist das Transmissionsverhalten des ersten Schichtstapels nach dem Stand der Technik gemäß der DE 100 23 936 A1 durch eine gestrichelte Kurve 42 angedeutet.

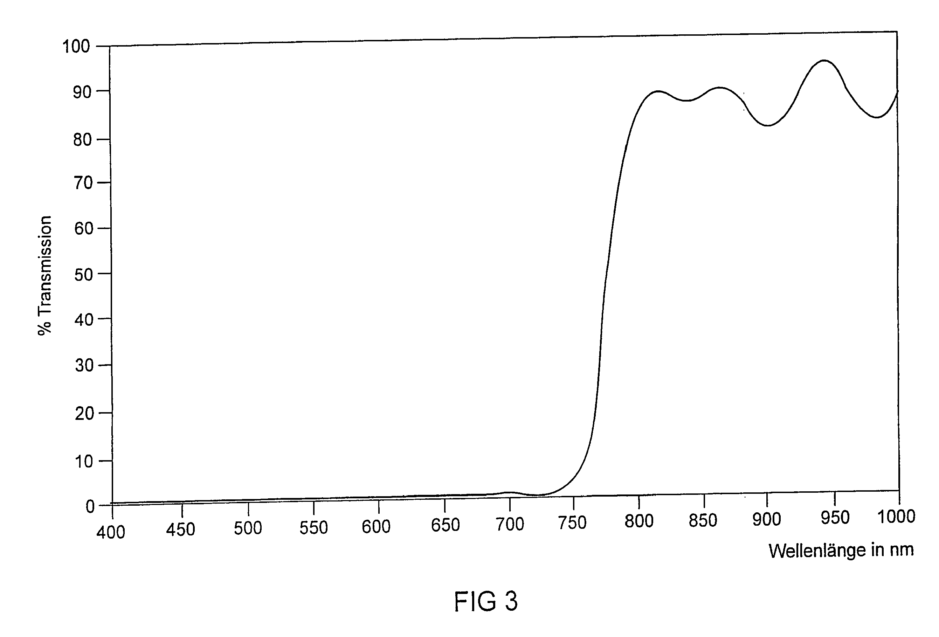

Gemäß der Kurve 36 ist das Absorptionsfilter des ersten Schichtstapels 30 derart ausgebildet, dass der für NIR-Anwendungen ungewünschte kurzwellige violette bis rote Spektralbereich (ca. <720 nm) größtenteils absorbiert wird. d.h. die Transmissionsschwingungen der Kurven 38 und 40 im Bereich von ca. 400 nm bis 580 nm werden durch die Absorptionswirkung des ersten Schichtstapels 30 überlagert. Aufgrund der gegenüber der Kurve 42 gemäß dem Stand der Technik erfindungsgemäß verringerten Transmission des Absorptionsfilters im roten Spektralbereich, werden nachfolgend weniger Schichtstapel benötigt, da die Schichtdicken der folgenden Schichtstapel 32, 34 auf eine steile Filterkante und eine hohe Transmission für elektromagnetische Strahlung aus dem NIR-Spektralbereich (>780 nm) optimiert sind. Aus diesem Grund kann das Interferenzfilter 28 aus drei anstatt fünf Schichtstapeln bestehen. Die weitere Unterdrückung der Transmission im gelb-roten Spektralbereich und die Ausbildung einer steilen Filterkante des erfindungsgemäßen Interferenzfilters 28 im NIR-Wellenlängenbereich erfolgt durch den zweiten und dritten Schichtstapel 32, 34 des Interferenzfilters 28. Die Filterkante des Schichtstapels 34 bei der die Transmission gemäß der Kurve 40 fünfzig Prozent des einfallenden Lichtes beträgt, liegt gemäß Figur 2 bei ungefähr 790 nm. In Figur 3 ist die Transmissionskurve des erfindungsgemäßen, aus den drei Schichtstapeln 30, 32 und 34 bestehenden kompletten Interferenzfilters 28 dargestellt. Die Fillerkante des kompletten Interferenzfilters 28 liegt zwischen 780 nm und 790 nm. Der Übergang der Transmission von 10% auf 80% erfolgt bei dem Interferenzfilter 28 in einem schmalen Wellenlängenbereich von nur 37 nm. Dadurch wird elektromagnetische Strahlung im gewünschten NIR-Bereich abgestrahlt und die Abstrahlung von ungewünschtem roten Restlicht verhindert. Die erfindungsgemäße Glühlampe 1 emittiert daher elektromagnetische Strahlung im NIR-Wellenlängenbereich und kann als Infrarotstrahler für aktive Nachtsichtgeräte in NIR-Fahrzeugscheinwerfern verwendet werden.

Die Erfindung beschränkt sich nicht auf das oben näher erläuterte Ausführungsbeispiel, insbesondere können für die Interferenzschichten andere geeignete Materialien und Beschichtungsprozesse Verwendung finden. Je nach Beschichtungsverfahren kann als optisch hochbrechendes Material alternativ z. B. auch TiO₂ (Titandioxid) eingesetzt werden. Die physikalischen Schichtdicken von TiO₂ werden dann aufgrund des unterschiedlichen Brechungsindexes um einen Faktor von ungefähr 0,9 angepasst.

Außerdem kann die Erfindung auch mit einer anderen Anzahl von optisch niedrigbrechenden und optisch hochbrechenden Schichten und Schichtstapeln ausgeführt werden.

Die Erfindung beschränkt sich nicht auf das oben erläuterte Ausführungsbeispiel, insbesondere kann die Erfindung auf Glühlampen mit beliebiger Lampengefäßgeometrie angewendet werden. Neben der Anwendung als Strahlungsquelle für Nachtsichtgeräte kann die Erfindung auch für andere Anwendungen z.B. als IR-Heizstrahler eingesetzt werden.

Die näher erläuterte, bevorzugte Ausführung ist für minimales sichtbares Restlicht abgestimmt. Durch Modifikationen des Schichtdesigns kann der Restlichtwert, sowie dessen abgestrahlte Farbtemperatur in vielfältiger Weise und Variationen eingestellt werden.

Offenbart ist eine Glühlampe 1, insbesondere Halogenglühlampe zur Erzeugung von elektromagnetischer Strahlung in einem nahinfraroten Wellenlängenbereich (NIR-Wellenlängenbereich) mit einem lichtdurchlässigen Lampengefäß 8, einem von dem Lampengefäß 8 umgebenen Leuchtmittel 12 und einem auf dem Lampengefäß 8 angeordneten Interferenzfilter 28, das mehrere Schichtstapel 30, 32. 34 mit einer Vielzahl optisch niedrigbrechender und optisch hochbrechender Schichten aufweist, wobei ein erster Schichtstapel 30 des Interferenzfilters 28 als Absorptionsfilter 30 zur Absorption von ungewünschten Lichtspektren mit zumindest zwei Absorptionsschichten und einer, zwischen den Absorptionsschichten angeordneten, optisch niedrigbrechenden Zwischenschicht ausgebildet ist. Erfindungsgemäß hat das Absorptionsfilter 30 eine geringe Transmission für Licht in einem im Wesentlichen roten Spektralbereich, wobei das Interferenzfilter 28 aufgrund der weiteren Schichtstapel 32, 34 eine Filterkante im NIR-Wellenlängenbereich besitzt.

**Tabelle 1**

| Aufbau der Interferenzfilterbeschichtung | | | |
|---|---|---|---|
| Schichtstapel-Nr. | Schicht-Nr. | Schichtart | ca. Schichtdicke [nm] |
| | 1 | Fe₂O₃ | 32 |
| 30 | 2 | SiO₂ | 55 |
| | 3 | Fe₂O₃ | 194 |
| | 4 | Nb₂O₅ | 14 |
| | 5 | SiO₂ | 116 |
| | 6 | Nb₂O₅ | 40 |
| | 7 | SiO₂ | 116 |
| | 8 | Nb₂O₅ | 40 |
| | 9 | SiO₂ | 116 |
| 32 | 10 | Nb₂O₅ | 40 |
| | 11 | SiO₂ | 116 |
| | 12 | Nb₂O₅ | 40 |
| | 13 | SiO₂ | 116 |
| | 14 | Nb₂O₅ | 40 |
| | 15 | SiO₂ | 116 |
| | 16 | Nb₂O₅ | 40 |
| | 17 | SiO₂ | 116 |
| | 18 | Nb₂O₅ | 40 |
| | 19 | SiO₂ | 116 |
| | 20 | Nb₂O₅ | 62 |
| | 21 | SiO₂ | 117 |
| | 22 | Nb₂O₅ | 71 |
| | 23 | SiO₂ | 117 |
| | 24 | Nb₂O₅ | 71 |
| | 25 | SiO₂ | 117 |
| | 26 | Nb₂O₅ | 71 |
| | 27 | SiO₂ | 117 |
| 34 | 28 | Nb₂O₅ | 71 |
| | 29 | SiO₂ | 117 |
| | 30 | Nb₂O₅ | 71 |
| | 31 | SiO₂ | 117 |
| | 32 | Nb₂O₅ | 71 |
| | 33 | SiO₂ | 117 |
| | 34 | Nb₂O₅ | 71 |
| | 35 | SiO₂ | 117 |
| | 36 | Nb₂O₅ | 36 |

## Patentansprüche

1. Glühlampe zur Erzeugung von elektromagnetischer Strahlung in einem nahinfraroten Wellenlängenbereich (NIR-Wellenlängenbereich) mit einem lichtdurchlässigen Lampengefäß (8), einem von dem Lampengefäß (8) umgebenen Leuchtmittel (12) und einem auf dem Lampengefäß (8) angeordneten Interferenzfilter (28), das eine Vielzahl optisch niedrigbrechender und optisch hochbrechender Schichten aufweist, wobei das Interferenzfilter eine Filterkante im NIR-Wellenlängenbereich besitzt,
**dadurch gekennzeichnet, dass**
die optisch niedrigbrechenden und optisch hochbrechenden Schichten in mindestens drei Schichtstapeln (30, 32, 34) angeordnet sind, wobei ein erster Schichtstapel (30) des Interferenzfilters (28) als Absorptionsfilter (30) mit zumindest zwei Absorptionsschichten und einer, zwischen den Absorptionsschichten angeordneten, optisch niedrigbrechenden Zwischenschicht ausgebildet ist, wobei das Absorptionsfilter (30) eine geringe Transmission für Licht in einem im Wesentlichen roten Spektralbereich aufweist, wobei die Schichtdicke der ersten, unmittelbar auf dem Lampengefäß angeordneten Absorptionsschicht, mit der Schichtdicke der zweiten, auf die optisch niedrigbrechende Zwischenschicht folgenden Absorptionsschicht ein Schichtdickenverhältnis im Bereich von etwa 1:3 bis 1:9 aufweist, wobei die erste Absorptionsschicht eine Schichtdicke im Bereich von etwa 20 nm bis 40 nm und/oder die zweite Absorptionsschicht eine Schichtdicke im Bereich von etwa 180 nm bis 210 nm aufweist, und wobei die Filterkante des Interferenzfilters aufgrund der weiteren Schichtstapel (32, 34) im NIR-Wellenlängenbereich liegt.

2. Glühlampe nach Anspruch 1, wobei die beiden Absorptionsschichten Fe₂O₃-Schichten sind.

3. Glühlampe nach einem der vorhergehenden Ansprüche, wobei das Interferenzfilter (28) derart ausgebildet ist, dass seine Filterkante in einem Wellenlängenbereich von 760 bis 1000 nm, vorzugsweise im Bereich von 780 nm bis 790 nm liegt.

4. Glühlampe nach Anspruch 1 oder 3, wobei die Filterkante derart ausgebildet ist, dass der Übergang der Transmission von 10% auf 80% in einem Wellenlängenbereich von kleiner oder gleich 50 nm stattfindet.

5. Glühlampe nach einem der vorhergehenden Ansprüche, wobei die Lampe (1) in Nachtsichtgeräten, insbesondere in einem NIR-Fahrzeugscheinwerfer zum Einsatz kommt.

6. Glühlampe nach einem der vorhergehenden Ansprüche, wobei die Lampe (1) als elektrischer Infrarot-Strahler für Heizzwecke zum Einsatz kommt.

## Claims

1. Incandescent lamp for producing electromagnetic radiation in a near-infrared wavelength range (NIR wavelength range) having a transparent lamp vessel (8), a luminous means (12) surrounded by the lamp vessel (8) and an interference filter (28), which is arranged on the lamp vessel (8) and has a large number of layers having a low optical refractive index and layers having a high optical refractive index, the interference filter having a filter edge in the NIR wavelength range, **characterized in that** the layers having a low optical refractive index and the layers having a high optical refractive index are arranged in at least three layer stacks (30, 32, 34), a first layer stack (30) of the interference filter (28) being in the form of an absorption filter (30) with at least two absorption layers and one intermediate layer having a low optical refractive index arranged between the absorption layers, the absorption filter (30) having a low transmission for light in a substantially red spectral range, the layer thickness of the first absorption layer, which is arranged directly on the lamp vessel, having a layer thickness ratio in the range of from approximately 1:3 to 1:9 in relation to the layer thickness of the second absorption layer, which follows the intermediate layer having a low optical refractive index, the first absorption layer having a layer thickness in the range of from approximately 20 nm to 40 nm and/or the second absorption layer having a layer thickness in the range of from approximately 180 nm to 210 nm, and the filter edge of the interference filter, owing to the further layer stacks (32, 34), being in the NIR wavelength range.

2. Incandescent lamp according to Claim 1, the two absorption layers being Fe₂O₃ layers.

3. Incandescent lamp according to one of the preceding claims, the interference filter (28) being formed such that its filter edge is in a wavelength range of from 760 nm to 1000 nm, preferably in the range of from 780 nm to 790 nm.

4. Incandescent lamp according to Claim 1 or 3, the filter edge being designed such that the transition of the transmission from 10% to 80% takes place in a wavelength range of less than or equal to 50 nm.

5. Incandescent lamp according to one of the preceding claims, the lamp (1) being used in night vision devices, in particular in an NIR vehicle headlamp.

6. Incandescent lamp according to one of the preceding claims, the lamp (1) being used as an electrical infrared radiator for heating purposes.

## Revendications

1. Lampe à incandescence pour la production de rayonnement électromagnétique dans un domaine de longueur d'onde dans l'infrarouge proche ( domaine de longueur d'onde IRP ) comprenant une enceinte ( 8 ) de lampe transparente à la lumière, un agent ( 12 ) d'éclairage entouré par l'enceinte ( 8 ) de lampe et un filtre ( 28 ) interférentiel, mis sur l'enceinte ( 8 ) de lampe et ayant une pluralité de couches peu réfringentes optiquement et très réfringentes optiquement, le filtre interférentiel ayant un bord de filtre dans le domaine de longueur d'onde IRP,
**caractérisée en ce que**
les couches peu réfringentes optiquement et très réfringentes optiquement sont disposées en au moins trois empilements ( 30, 32, 34 ) de couches, un premier empilement ( 30 ) de couches du filtre ( 28 ) interférentiel étant constitué en filtre ( 30 ) d'absorption ayant au moins deux couches d'absorption et une couche intermédiaire peu réfringente optiquement disposée entre les couches d'absorption, le filtre ( 30 ) d'absorption ayant une transmission petite pour de la lumière dans un domaine spectrale essentiellement rouge, l'épaisseur de la première couche d'absorption, mise directement sur l'enceinte de la lampe, ayant, avec l'épaisseur de la deuxième couche d'absorption suivant la couche intermédiaire peu réfringente optiquement, un rapport d'épaisseur de couches allant d'environ de 1:3 à 1:9, la première couche d'absorption ayant une épaisseur allant d'environ 20 nm à 40 nm et/ou la deuxième couche d'absorption ayant une épaisseur allant d'environ 180 nm à 210 nm, et le bord du filtre interférentiel se trouvant en raison des autres empilements ( 32, 34 ) de couches dans le domaine des longueurs d'ondes IRP.

2. Lampe à incandescence suivant la revendication 1, dans laquelle les deux couches d'absorption sont des couches en Fe₂0₃.

3. Lampe à incandescence suivant l'une des revendications précédentes, dans laquelle le filtre ( 28 ) interférentiel est constitué de manière à se que son bord de filtre se trouve dans un domaine de longueur d'onde allant de 760 à 1000 nm, de préférence, dans le domaine allant de 780 nm à 790 nm.

4. Lampe à incandescence suivant la revendication 1 ou 3, dans laquelle le bord du filtre est constitué de façon à ce que le passage de la transmission de 10% à 80% ait lieu dans un domaine de longueur d'onde inférieur ou égal à 50 nm.

5. Lampe à incandescence suivant l'une des revendications précédentes, dans laquelle la lampe ( 1 ) est utilisée dans des appareils de vision de nuit, notamment dans un phare de véhicule IRP.

6. Lampe à incandescence suivant l'une des revendications précédentes, dans laquelle la lampe ( 1 ) est utilisée en source de rayonnement infrarouge électrique à des fins de chauffage.
